# FASCICULE DE BREVET EUROPEEN

(11) **EP 4 003 810 B1**
(45) Date de publication et mention de la délivrance du brevet: **19.02.2025**
(21) Numéro de dépôt: 20757224.9
(22) Date de dépôt: 23.07.2020
(51) Int. Cl.: B61H 5/00, F16D 55/224

(54) **SYSTÈME DE FREINAGE FERROVIAIRE COMPORTANT UNE TIMONERIE DE FREINAGE ET VÉHICULE FERROVIAIRE POURVU D'UN TEL SYSTÈME**
SCHIENENBREMSSYSTEM MIT BREMSGESTÄNGE UND SCHIENENFAHRZEUG MIT EINEM SOLCHEN SYSTEM
RAILWAY BRAKING SYSTEM COMPRISING BRAKE RIGGING, AND RAIL VEHICLE EQUIPPED WITH SUCH A SYSTEM

(30) Priorité: 26.07.2019 FR 1908510; 26.07.2019 FR 1908512; 18.10.2019 FR 1911666
(43) Date de publication de la demande: 01.06.2022
(73) Titulaire: Wabtec Hauts-de-France, 80000 Amiens (FR)
(72) Inventeur: GONCALVES, Claudino, 80620 RIBEAUCOURT (FR); GERBER-PAPIN, Denis, 80830 L'ETOILE (FR); BEAUVOIS, Damien, 80000 AMIENS (FR)
(74) Mandataire: Santarelli
(86) Numéro de dépôt international: PCT/EP2020/070887
(87) Numéro de publication internationale: WO 2021/018743

(56) Documents cités:
- DE-A1- 102017 101 028
- DE-A1- 2 233 180
- FR-A1- 2 706 844

## Description

### Domaine technique de l'invention

L'invention concerne le domaine du freinage des véhicules ferroviaires. Elle concerne plus particulièrement un système de freinage pour véhicule ferroviaire à freins à au moins une garniture, pourvu d'une timonerie de freinage et d'un frein de service et/ou de parking configuré pour agir sur des organes de freinage du véhicule, tel que par exemple des disques de frein, par l'intermédiaire de la timonerie de freinage.

### Etat de la technique

Les véhicules ferroviaires dits à freins à au moins une garniture sont généralement équipés de systèmes de freinage à cylindres de frein de service et/ou de parking, comportant un piston mobile sous l'effet d'un fluide sous pression, le déplacement de ce piston actionnant une timonerie de freinage et entraînant une action de freinage telle que le serrage d'un disque de frein par la garniture de cette timonerie.

Un tel système de freinage est monté sur le véhicule ferroviaire, pour être en contact avec les disques de frein ou bien les roues. En particulier, il peut être assujetti mécaniquement sur un bogie, ou bien sur un essieu fixé au bogie, ou encore sur un autre dispositif du type moteur d'entraînement ou boîte de vitesses montés aussi sur le bogie.

L'action de freinage engendre des efforts de freinage qui peuvent être transmis, via la timonerie de freinage, au support auquel est assujetti le système de freinage. Ces efforts peuvent générer des déformations, ou à tout le moins des déplacements, de la timonerie de freinage par rapport au disque de frein du véhicule, entrainant ainsi une usure irrégulière de la garniture.

La demande de brevet allemand DE 10 2017 101 028 et la demande de brevet français FR 2 706 844 divulguent des biellettes montées à rotation sur des supports garniture, au niveau de pattes d'attache de ces derniers.

### Exposé de l'invention

L'invention concerne un système de freinage pour véhicule ferroviaire à freins au moins une garniture, à la résistance améliorée et qui reste simple, commode et économique.

L'invention a ainsi pour objet, sous un premier aspect, un système de freinage ferroviaire pour véhicule ferroviaire, comportant une timonerie de freinage, un frein de service et/ou de parking configuré pour agir sur au moins un organe de freinage dudit véhicule ferroviaire par l'intermédiaire de ladite timonerie de freinage, laquelle est pourvue d'au moins un dispositif ayant au moins un support garnitures et au moins une garniture assujettie mécaniquement sur ledit au moins un support garnitures, et au moins une biellette de transmission d'efforts assujettie mécaniquement par une première extrémité à un support dudit véhicule et par une seconde extrémité opposée à ladite première extrémité audit au moins un support garnitures, caractérisé en ce que ledit au moins un support garnitures comporte une patte d'attache pourvue d'un logement et d'un organe de montage logé dans ledit logement, et ladite au moins une biellette de transmission d'efforts est montée à rotation par sa seconde extrémité dans ledit organe de montage.

Grâce à l'organe de montage qui est monté dans le logement de la patte d'attache sans jeu substantiel, la biellette ne présente ni jeu horizontal ni jeu vertical par rapport au support garnitures.

Ceci permet de limiter les mouvements du type basculement du système de freinage ferroviaire par rapport à l'organe de freinage du véhicule et ainsi d'éviter un désalignement du support garnitures et donc des garnitures par rapport à cet organe de freinage.

Au contraire, la possibilité de mouvement en rotation entre la biellette de transmission d'efforts et le support garnitures permet au support garnitures de s'auto-incliner pour conserver une application optimale de l'effort de freinage tout en permettant de renvoyer les efforts vers le support du véhicule. Ceci permet en outre de limiter l'usure en biais des garnitures, malgré les déformations que peut par exemple subir l'organe de freinage.

Des caractéristiques préférées, simples, commodes et économiques du système selon l'invention sont présentées ci-après.

Ladite au moins une biellette de transmission d'efforts peut présenter une forme sensiblement en L, ou en S, ou en H, ou en Y.

Ladite au moins une biellette de transmission d'efforts est assujettie mécaniquement par des liaisons pivots respectivement audit support du véhicule et audit au moins un support garnitures.

Ladite au moins une biellette de transmission d'efforts peut être pourvue, au niveau de sa deuxième extrémité, d'un axe venant de matière avec ladite biellette de transmission d'efforts et saillant d'un bras principal de ladite biellette de transmission.

Ladite au moins une biellette de transmission d'efforts peut être pourvue, au niveau de sa deuxième extrémité, d'un manchon emmanché dans un bras principal de ladite biellette de transmission et d'un organe de fixation monté au travers dudit manchon et assujetti mécaniquement dans le bras principal.

Ledit au moins un support garnitures peut comporter une pièce de blocage montée fixe dans ledit logement et superposée avec ledit organe de montage.

Ledit au moins un support garnitures peut comporter en outre au moins un organe élastique interposé entre ladite pièce de blocage et ledit organe de montage.

Ledit au moins un organe élastique peut être formé par une ou plusieurs rondelles Belleville, ou par au moins un ressort par exemple hélicoïdal, ou au moins un élastomère.

Ladite timonerie peut comporter au moins un levier s'étendant depuis ledit frein de service et/ou de parking jusqu'audit dispositif auquel il est fixé au niveau d'une zone d'attache dudit au moins un support garnitures, ledit au moins un levier étant configuré pour transmettre un effort d'application dudit frein de service et/ou de parking sur ledit dispositif, et ladite au moins une biellette de transmission d'efforts peut être fixée à proximité immédiate de ladite zone d'attache dudit au moins un levier.

Ledit au moins un support garnitures peut être pourvu d'un socle inférieur et d'un axe de montage monté mobile en rotation entre ladite patte d'attache et ledit socle inférieur, ledit levier étant assujetti mécaniquement audit axe de montage.

Ledit axe de montage peut être interposé entre ledit organe de montage et un organe de butée situé au niveau dudit socle inférieur.

Ladite zone d'attache peut se trouver au plus à 35 mm d'un axe central transversal dudit dispositif.

En d'autres termes, les forces appliquées par le levier de la timonerie de freinage sur le dispositif de cette timonerie pour le mettre au contact de l'organe de freinage du véhicule, notamment un disque de frein, sont sensiblement centrées sur le support garnitures. Puisque la zone d'attache du levier sur le support garnitures est proche de l'axe central transversal du dispositif, cela permet au support garnitures de disposer d'un degré de liberté lorsqu'il transmet des efforts sur le disque de frein du véhicule.

En particulier, le support garnitures peut plus facilement s'auto-incliner pour s'adapter au type de système de freinage et/ou aux conditions d'utilisation du véhicule ferroviaire. Par exemple, l'agencement de la timonerie de freinage dont la forme l'agencement et/ou les matériaux du support garnitures et/ou des garnitures, et/ou le fait qu'il s'agisse d'un frein de parking ou bien d'un frein de service, et/ou le type de véhicule (tram, métro, train grande vitesse, etc.), et/ou la charge du véhicule, et/ou le trajet effectué par le véhicule, et/ou le type d'organe de freinage (diamètre, épaisseur, matière du disque), peuvent être des paramètres qui font que le support garnitures peut se placer de manière optimale.

Ladite zone d'attache peut se trouver entre environ 0 et 35 mm dudit axe central transversal dudit dispositif.

Ladite zone d'attache peut s'étendre selon une orientation générale longitudinale dudit dispositif et sur une longueur comprise entre environ 15 mm et environ 70 mm.

Ladite zone d'attache peut s'étendre de part et d'autre dudit axe central transversal dudit dispositif de manière ininterrompue.

Ladite au moins une zone d'attache peut s'étendre de part et d'autre dudit axe central transversal dudit dispositif de manière interrompue.

Ladite au moins une biellette de transmission d'efforts peut s'étendre sensiblement dans un même plan que celui dans lequel s'étend ledit au moins un levier.

Ledit dispositif peut comporter au moins deux zones d'appui sur ledit au moins un organe de freinage et au moins une zone de retrait située entre les deux dites zones d'appui.

Ledit au moins un support garnitures et/ou ladite au moins une garniture peuvent présenter une orientation générale longitudinale et une orientation générale transversale, avec lesdites zones d'appui et de retrait qui se succèdent selon ladite orientation générale longitudinale.

Le système peut comporter au moins deux garnitures assujetties mécaniquement sur un dit support garnitures, avec au moins une dite zone d'appui qui se trouve en regard d'une dite garniture respective.

Lesdites au moins deux zones d'appui et ladite au moins une zone de retrait peuvent être ménagées sur ledit au moins un support garnitures.

Lesdites au moins deux zones d'appui et ladite au moins une zone de retrait peuvent être ménagées sur ladite au moins une garniture.

Ledit dispositif peut comporter une pluralité de dites zones d'appui entre lesquelles sont formées des dites zones de retrait.

De telles zones d'appui et de retrait sont configurées pour répartir la transmission des efforts sur l'organe de freinage. Ces zones n'ont rien à voir avec d'éventuelles zones de fixation des garnitures sur le support de garniture, ces dernières n'étant pas configurées pour répartir la transmission des efforts sur l'organe de freinage.

Ledit au moins un support garnitures et/ou ladite au moins une garniture peuvent présenter une orientation générale longitudinale et une orientation générale transversale, avec lesdites zones d'appui et de retrait qui se succèdent selon ladite orientation générale longitudinale.

Au moins une dite zone d'appui et/ou de retrait peut s'étendre totalement ou seulement partiellement le long de ladite orientation générale transversale.

Lesdites zones d'appui et de retrait sont ménagées sensiblement symétriquement par rapport à un axe central transversal dudit dispositif. Cet axe peut correspondre par exemple à un axe médian dudit organe de freinage dudit véhicule ferroviaire.

Au moins une dite zone d'appui peut être formée en escalier et ainsi comporter différentes portions d'appui plus ou moins décalées par rapport à la zone de retrait adjacente.

L'invention a aussi pour objet, sous un deuxième aspect, un véhicule ferroviaire comportant au moins un organe de freinage, notamment un disque de frein, et au moins un système de freinage ferroviaire tel que décrit ci-dessus, qui est configuré pour agir sur ledit au moins un organe de freinage.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement et partiellement un système de freinage ferroviaire pourvu notamment d'un frein de service, d'un frein de parking et d'une unité de contrôle et de commande.
La figure 2 représente partiellement et schématiquement le système illustré sur la figure 1, assujetti mécaniquement à un essieu d'un bogie d'un véhicule ferroviaire comportant un tel système de freinage ferroviaire.
La figure 3 illustre une biellette de transmission d'efforts assujettie mécaniquement d'une part sur un support garnitures du système de freinage ferroviaire et d'autre part, sur l'essieu du bogie.
La figure 4 est une vue détaillée de la biellette de transmission d'efforts assujettie mécaniquement sur le support garnitures.
La figure 5 est une vue en coupe frontale de la figure 4.
La figure 6 est une vue en coupe latérale de la figure 4.
La figure 7 est une vue similaire à celle de la figure 4, en perspective et en coupe partielle au niveau de la biellette de transmission et de la partie du support garnitures où elle est assujettie.
La figure 8 est une vue en coupe frontale, similaire à celle de la figure 5, montrant une variante de réalisation de la biellette de transmission.
La figure 9 est une vue en coupe latérale, similaire à celle de la figure 6, montrant la variante de réalisation de la biellette de transmission.
La figure 10 est une vue similaire à celle de la figure, montrant la variante de réalisation de la biellette de transmission.
La figure 11 représente schématiquement un support garnitures du système de freinage ferroviaire de la figure 1, lequel support garnitures est monté en regard d'une première face d'un disque de frein aussi illustré sur la figure 1.
La figure 12 est une vue en coupe représentée XII-XII sur la figure 11.
La figure 13 représente schématiquement une face de contact du support garnitures illustré sur la figure 11.
La figure 14 illustre schématiquement des garnitures en regard de la première face du disque de frein, lesquelles garnitures sont prévues pour être portées par le support garnitures.
La figure 15 est une vue similaire à celle de la figure 12, montrant une première variante de réalisation du support garnitures.
La figure 16 est une vue similaire à celle de la figure 13, montrant la première variante de réalisation du support garnitures.
La figure 17 est une vue similaire à celle de la figure 14, les garnitures étant montées sur la première variante de réalisation du support garnitures.
La figure 18 est une vue similaire à celle de la figure 11, montrant un support garnitures selon un deuxième mode de réalisation du système de freinage ferroviaire de la figure 1.
La figure 19 est une vue en coupe représentée XIX-XIX sur la figure 18.
La figure 20 représente schématiquement une face de contact du support garnitures illustré sur la figure 18.
La figure 21 est une vue similaire à celle de la figure 14.
La figure 22 est une vue similaire à celle de la figure 19, montrant une première variante de réalisation du support garnitures selon le deuxième mode de réalisation du système.
La figure 23 est une vue similaire à celle de la figure 20, montrant la première variante de réalisation du support garnitures selon le deuxième mode de réalisation du système.
La figure 24 est une vue similaire à celle de la figure 18, avec en plus la biellette de transmission d'efforts qui est assujettie mécaniquement sur le support garnitures.
La figure 25 est une vue similaire à celle de la figure 22, avec en plus la biellette de transmission d'efforts.
La figure 26 est une vue similaire à celle de la figure 19, avec en plus la biellette de transmission d'efforts.
La figure 27 est une vue du même genre que celle de la figure 12, montrant un support garnitures selon un troisième mode de réalisation du système de freinage ferroviaire, avec la biellette de transmission d'efforts.
La figure 28 est une vue très schématique montrant un support garnitures selon un quatrième mode de réalisation du système de freinage ferroviaire.

### Description détaillée

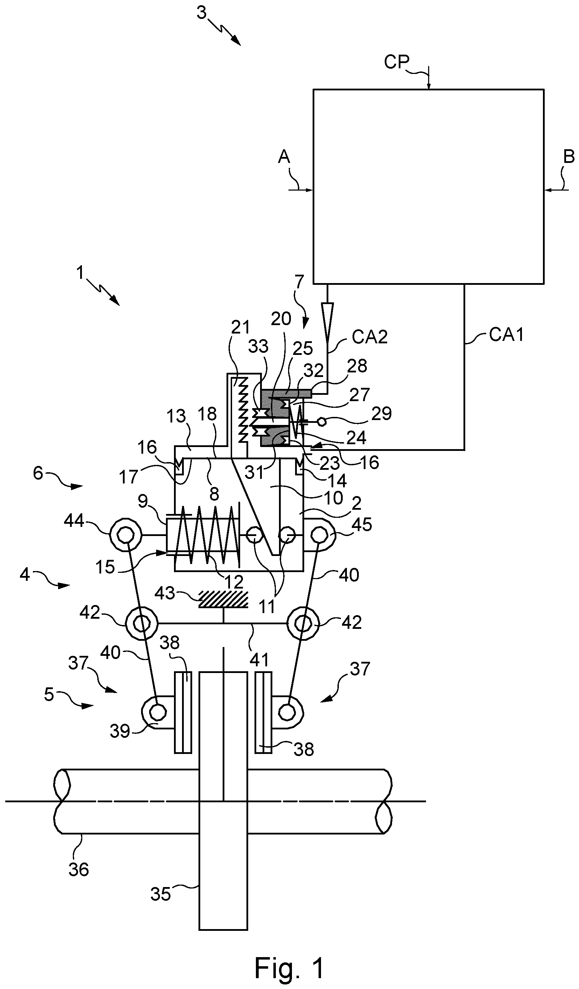

La figure 1 représente schématiquement un système de freinage ferroviaire 1 pour un véhicule ferroviaire à frein à garnitures.

Il s'agit d'un système de freinage ferroviaire structurellement du type de celui décrit dans la demande de brevet européen EP 2 826 684.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, et une timonerie de freinage 4 reliée mécaniquement au corps 2.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés, respectivement un premier côté 17 configuré pour agir sur la timonerie de freinage 4 par l'intermédiaire de la tige de poussée 9, et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14, par exemple formée par un joint d'étanchéité, disposée entre ce piston de freinage 8 et des bords intérieurs du corps 2.

Le frein de service 6 peut comporter une pièce de coin 10 fixée sur le premier côté 17 du piston de freinage 8.

Cette pièce de coin 10 peut présenter une section triangulaire et être configurée pour coopérer avec un jeu de butées à roulements 11, dont l'une des butées à roulements peut être reliée au corps 2 tandis que l'autre des butées à roulements peut être reliée à la tige de poussée 9.

Cette tige de poussé 9 peut être pourvue d'un régleur d'usure configuré pour compenser l'usure des garnitures du frein afin d'éviter qu'un jeu trop important (consécutif à l'usure des garnitures) ne réduise l'effort de freinage.

Le frein de service 6 peut comporter un ressort 12 disposé autour de la tige de poussée 9, entre la butée à roulements qui est reliée à cette dernière et un bord intérieur du corps 2. Ce ressort 12 est configuré pour rappeler la butée qui est reliée à la tige de poussée 9 contre la pièce de coin 10.

Le frein de service 6 peut comporter un premier orifice 15 ménagé dans le corps 2 et configuré pour autoriser le déplacement de la tige de poussée 9 au travers de ce premier orifice 15.

Le frein de service 6 peut comporter un deuxième orifice 16 ménagé dans le corps 2 et débouchant dans la chambre de pression de frein de service 13.

La chambre de pression de frein de service 13 est ici raccordée par une première conduite d'alimentation, notée CA1 sur la figure 1, du réseau de cheminement de conduites pneumatiques, appelée plus généralement conduite de frein, laquelle conduite est connectée au niveau de ce deuxième orifice 16 à une source d'alimentation en agents de pression pneumatiques (non visible).

Le corps 2 comporte une cavité 27 accolée à la chambre de pression de frein de service 13 et dans laquelle est disposé le frein de parking 7.

Le frein de parking 7 comporte un dispositif de blocage formé par un doigt de blocage 20 mobile par rapport au corps 2 et s'étendant suivant la deuxième direction axiale.

Le frein de parking 7 comporte un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et qui est tourné vers la chambre de pression de frein de parking 25, ainsi qu'un second côté 32 opposé au premier côté.

Le frein de parking 7 comporte un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

Le piston de maintien 23 et l'élément ressort 24 peuvent former un dispositif de commande mobile du frein de parking 7.

Le piston de maintien 23 est configuré pour se déplacer dans le corps 2 tout en maintenant la chambre de pression de frein de parking 25 relativement étanche grâce à une membrane disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

L'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte un quatrième orifice 28 ménagé dans le corps 2 et débouchant dans la chambre de pression de frein de parking 25.

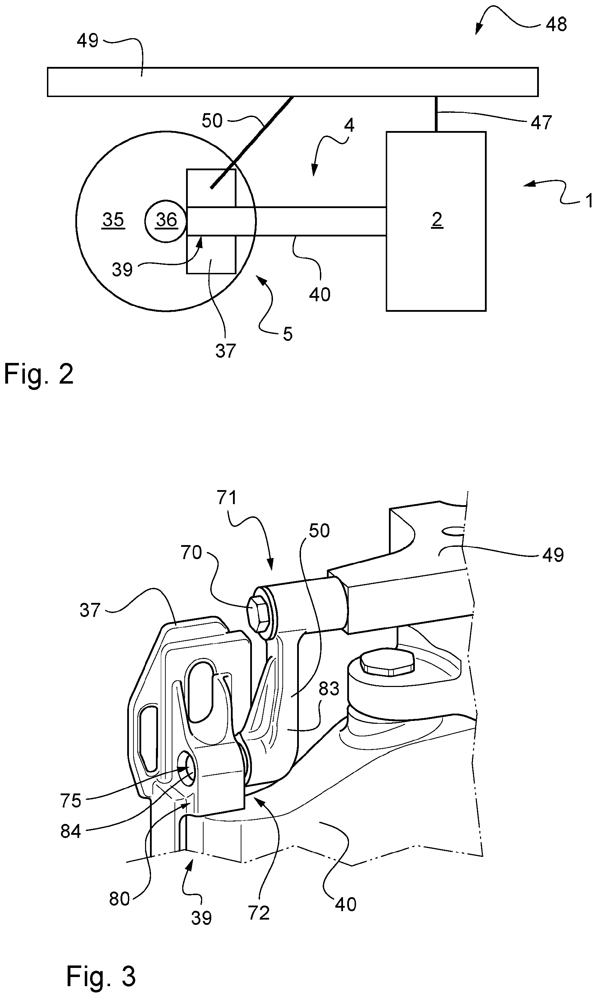

La chambre de pression de frein de parking 25 peut être raccordée par une deuxième conduite d'alimentation, notée CA2 sur la figure 1, du réseau de cheminement de conduites pneumatiques, appelée aussi conduite de frein de parking, connectée au niveau de ce quatrième orifice 28, à la source d'alimentation en agents de pression pneumatiques 73 (visible figure 2) via l'unité 3.

Le frein de parking 7 comporte une pièce de déverrouillage 29 pour désactiver le frein de parking 7.

La pièce de déverrouillage 29 peut par exemple être rattachée sur le deuxième côté 32 du piston de maintien 23 et déboucher à l'extérieur du corps 2 au travers d'un cinquième orifice (non représenté) ménagé dans ce corps 2 et débouchant dans la cavité 27.

La pièce de déverrouillage 29 est accessible pour être manipulée depuis l'extérieur du corps 2 le cas échéant.

La pièce de déverrouillage 29 peut être connectée à un dispositif indicateur prévu pour indiquer un état du frein de parking 7 et/ou un état du frein de service 6.

En particulier, la pièce de déverrouillage 29 peut être couplée à un commutateur assujetti mécaniquement à cette pièce 29 et présentant une première position et une deuxième position sélectionnée en fonction de la position de la pièce de déverrouillage 29.

Le frein de service 6 est disposé dans le corps 2 et est configuré pour agir sur un ou plusieurs organes de freinage 35 du véhicule ferroviaire par l'intermédiaire de la timonerie de freinage 4.

L'organe de freinage 35 du véhicule peut comporter un disque de frein (ici vu de dessus) monté par exemple sur un essieu 36 du véhicule ferroviaire, ou directement sur la roue à freiner.

La timonerie de freinage 4 est pourvue d'un dispositif 5 à garnitures prévu pour appliquer des efforts sur le disque de frein 35 lorsque la timonerie 4 est actionnée.

Ce dispositif 5 comporte ici deux supports garnitures 37 sur chacun desquels sont assujetties mécaniquement des garnitures 38.

En particulier, deux garnitures 38 peuvent être montées sur chaque support garnitures 37.

Chaque garniture 38 est prévue pour être appliquée au contact du disque 35 pour réduire sa vitesse de rotation et par conséquent celle de la roue à freiner.

La timonerie de freinage 4 comporte ici des leviers 40, par exemple sensiblement déformables.

Dans l'exemple décrit, chaque levier 40 est pourvu d'une portion supérieure et d'une portion inférieure qui sont solidaire et qui s'étendent depuis le frein de service et de parking jusqu'au dispositif 5.

Chaque portion des leviers 40 peut être articulée sur un connecteur central 41 par l'intermédiaire de deux pivots 42.

La portion supérieure de chaque levier 40 peut être reliée par une première extrémité à une articulation respective 44, 45.

La timonerie de freinage 4 peut recevoir le corps 2 entre les portions supérieures des leviers déformables 40, au niveau des articulations 44 et 45.

Le corps 2 peut être monté à rotation sur l'articulation 44 qui est solidaire d'une extrémité de la tige de poussée 9 tandis qu'il peut être monté fixe sur l'articulation 45, laquelle est directement solidaire de ce corps 2.

La portion inférieure de chaque levier 40 peut être reliée, à une deuxième extrémité opposée à sa première extrémité, à l'un des supports garnitures 37 au niveau d'une zone d'attache 39 ménagée sur ce dernier et qui est opposée aux garnitures 37.

La timonerie de freinage 4 peut comporter un premier organe de fixation 43 solidaire du connecteur central 41 pour le montage de cette timonerie de freinage 4 sur le véhicule ferroviaire ; afin que les supports garnitures 37 soient situés de part et d'autre du disque de frein 35 (ou de la roue du véhicule ferroviaire).

Le rapprochement des articulations 44 et 45 peut permettre d'écarter les supports garnitures 37 l'un de l'autre et qu'à l'inverse, l'éloignement de ces articulations 44 et 45 peut permettre de serrer les supports garnitures 37 sur le disque de frein 35 (ou sur la roue du véhicule ferroviaire).

L'unité de contrôle et de commande 3 est connectée à la chambre de pression de frein de service 13 par l'intermédiaire de la première conduite d'alimentation à laquelle elle est raccordée.

Cette unité 3 est connectée à la chambre de pression de frein de parking 25 par l'intermédiaire de la seconde conduite d'alimentation, notée CA sur la figure 1, à laquelle elle est raccordée.

Cette unité 3 est alimentée en agents pneumatiques par une conduite principale, notée CP, qui chemine généralement le long du véhicule ferroviaire.

L'unité 3 comporte des éléments systémiques (non représentés sur la figure 1) qui sont configurés pour recevoir et traiter des informations représentatives relatives par exemple à des consignes de fonctionnement du véhicule ferroviaire, par un premier canal du type électrique et/ou pneumatique et/ou encore manuel, noté A sur la figure 1.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté B sur la figure 1.

Ces éléments systémiques peuvent par exemple être formés par des relais pneumatiques et/ou des électrovannes et/ou des manostats et/ou des capteurs et/ou des détendeurs et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

L'unité de contrôle et de commande 3 peut être associée à une ou plusieurs timoneries de freinage du véhicule ferroviaire.

La figure 2 montre très schématiquement le véhicule ferroviaire 48 pourvu d'un essieu formant un support 49 auquel est assujetti mécaniquement le système 1, par l'intermédiaire par exemple d'un second organe de fixation 47 qui relie le corps 2 au support 49.

Le système 1 comporte au moins une biellette de transmission d'efforts 50 assujettie mécaniquement par une première extrémité au support 49 du véhicule 48 et par une seconde extrémité opposée à la première extrémité au support garnitures 37.

Le support garnitures 37 est ici en regard d'une face du disque 35 monté sur son axe d'essieu 36 du véhicule 48.

La figure 3 illustre un exemple de réalisation de la biellette de transmission d'efforts 50.

La biellette de transmission d'efforts 50 présente ici une forme sensiblement en L, ou en S.

La biellette de transmission d'efforts 50 s'étend sensiblement dans un même plan que celui dans lequel s'étend ledit levier 40.

Un tel agencement est particulièrement compact et permet un débattement maximum du support garnitures 37 par rapport au support 49, grâce à la biellette de transmission d'efforts 50 en L ou en S qui ne gêne par le mouvement du support garnitures 37.

La biellette 50 comporte un bras principal 83 s'étendant entre une première extrémité 71 où la biellette 50 est assujettie mécaniquement au support 49 par une liaison pivot 70, et une deuxième extrémité 72, opposée à sa première extrémité 71, où la biellette 50 est assujettie mécaniquement, via un axe 84, au support garnitures 37 par une liaison pivot 75.

En particulier, le support garnitures 37 est pourvu d'une patte d'attache 80 à laquelle est assujettie mécaniquement la biellette 50.

La biellette de transmission d'efforts 50 est ici assujettie mécaniquement sur le support garnitures 37 à proximité immédiate de la zone d'attache 39 du levier 40.

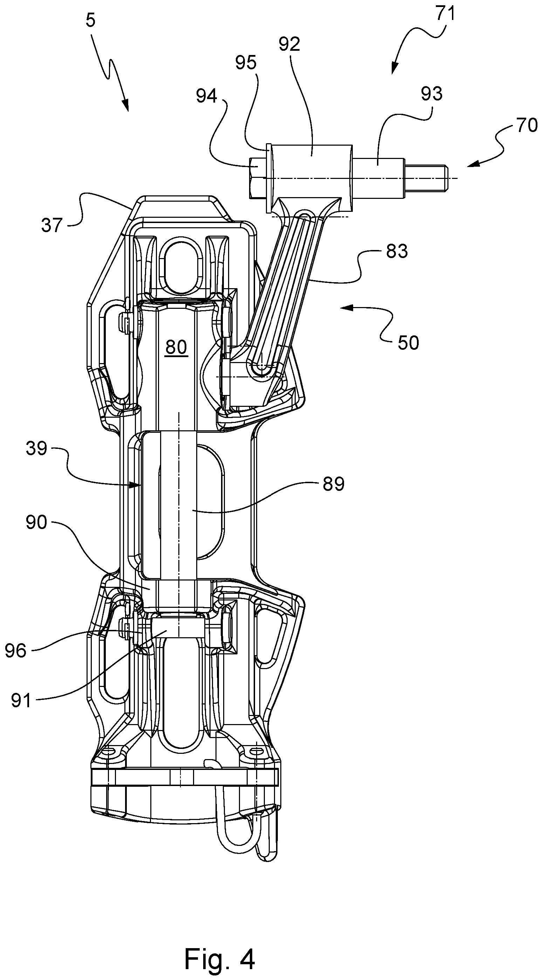

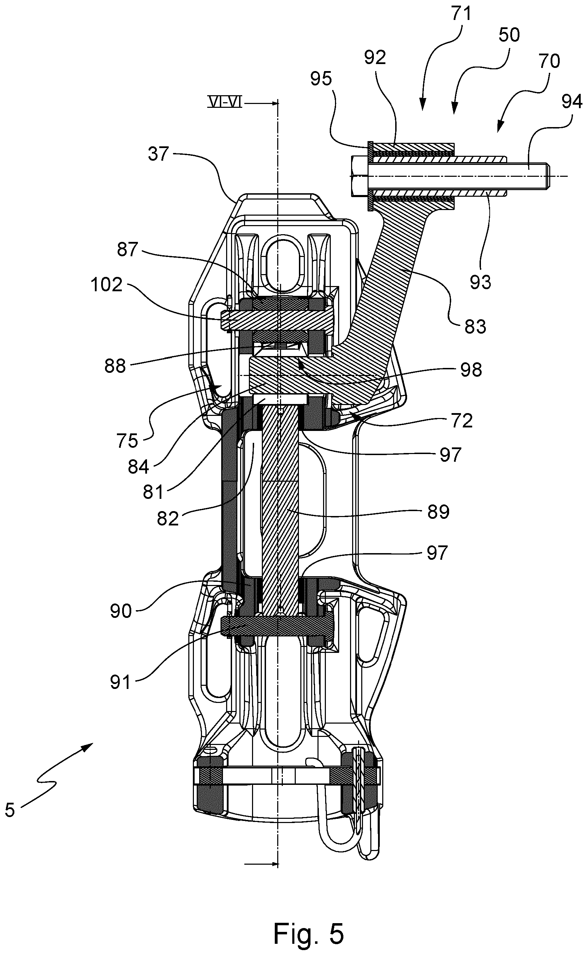

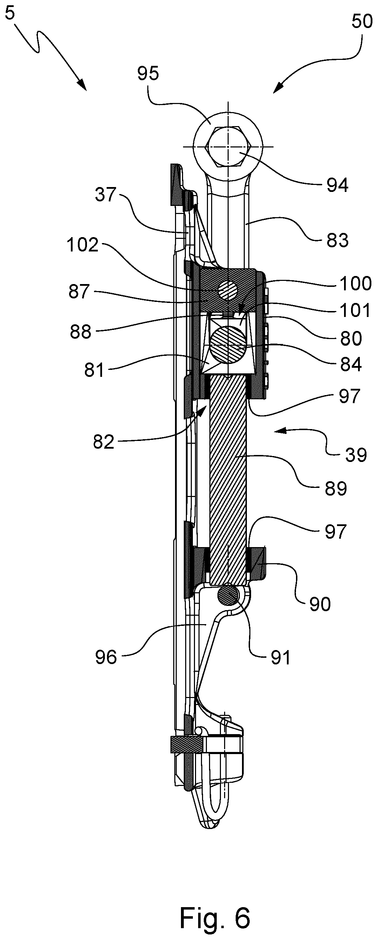

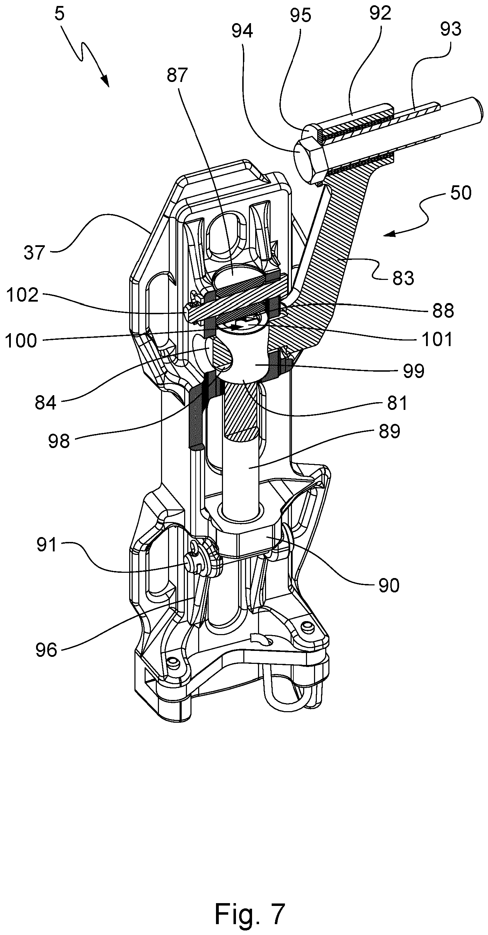

Comme visible plus en détail en référence aux figures 4 à 7, la patte d'attache 80 est située ici à proximité immédiate de la zone d'attache 39 du levier 40 de sorte que la biellette 50 est assujettie mécaniquement sur le support garnitures 37 à proximité immédiate de cette zone d'attache 39 du levier 40.

Le support garnitures 37 comporte un socle inférieur 90 ménagé à distance de la patte d'attache 80.

La zone d'attache 39 du levier s'étend ici entre la patte d'attache 80 et le socle inférieur.

Le support garnitures 37 comporte en outre un axe de montage 89 monté mobile en rotation entre la patte d'attache 80 et le socle inférieur 90.

Le support garnitures 37 comporte des œillets 96 formé ici immédiatement en dessous du socle inférieur 90 et dans lesquels est introduit un organe de butée 91, ici formé par exemple par un ensemble goupille et circlips.

L'axe de montage 89 traverse le socle inférieur 90 et repose sur l'organe de butée 91. L'axe de montage 89 permet l'assujettissement mécanique du levier de la timonerie (non visible).

Des bagues de montage 97 sont prévues pour permettre la rotation de l'axe de montage 89. Ces bagues de montage 97 sont logées dans le socle inférieur 90 et dans un logement 82 de la patte d'attache 80.

La patte d'attache 80 est en outre pourvue d'un organe de montage 81, aussi appelée pièce de liaison intermédiaire, logé dans son logement 82.

L'organe de montage 81 est introduit dans le logement 82 de la patte d'attache 80 et repose ici sur une extrémité de l'arbre de montage 89.

Ainsi, l'axe de montage 89 est ici interposé entre l'organe de montage 81 et l'organe de butée 91 situé au niveau du socle inférieur 90.

En variante, l'organe de montage pourrait être à distance de l'axe de montage.

L'organe de montage 81 est ici formé d'un corps sensiblement cylindrique 99 s'étendant longitudinalement et ayant un orifice traversant 98 le corps cylindrique 99 selon une direction transversale.

Le corps cylindrique 99 est ici pourvu en outre d'une ouverture supérieure 100 et d'un bouchon 101 mobile en translation dans le corps cylindrique 99.

L'organe de montage 81 présente ici des dimensions telles qu'il ne bouge pas dans la patte d'attache 80.

En d'autres termes, l'organe de montage 81 est monté dans le logement 82 de la patte d'attache 80 sans jeu substantiel.

Le support garnitures 37 comporte ici une pièce de blocage 87 montée fixe dans le logement 82 de la patte d'attache 80.

La pièce de blocage 87 est superposée avec l'organe de montage 81, de sorte que ce dernier est ici situé entre l'axe de montage 89 et la pièce de blocage 87.

La pièce de blocage 87 est pourvue d'un orifice traversé par un organe de fixation 102, par exemple un ensemble goupille et circlips, lequel organe de fixation 102 est monté en prise sur la patte d'attache 80.

Le support garnitures 37 comporte en outre ici un organe élastique 88 interposé entre la pièce de blocage 87 et l'organe de montage 81.

En particulier, l'organe élastique est en appui contre le bouchon 101 mobile dans le corps cylindrique 99 de l'organe de montage 81.

Ceci permet d'exercer une pression sur le bouchon 101 et ainsi plus ou moins obturer l'orifice traversant 98 dans le corps cylindrique 99.

L'organe élastique 88 peut être formé par une ou plusieurs rondelles Belleville.

Dans l'exemple décrit, l'axe 84 de la biellette 50 vient de matière avec le bras 83 et est formée en saillie de celui-ci, au niveau de la deuxième extrémité 72 de la biellette 50.

L'axe 84 de la biellette 50 est introduit dans l'orifice traversant 98 dans le corps cylindrique 99 de l'organe de montage 81.

La liaison pivot 75 est ainsi formée et la biellette 50 est montée à rotation par sa seconde extrémité 72 dans l'organe de montage 81.

L'organe élastique 88 peut permettre d'exercer une force via le bouchon 101 sur l'axe 84 de la biellette 50. En particulier, ceci peut générer un couple résistant pour limiter la rotation de la biellette 50 par rapport au support garnitures 37 lors de phases de roulage sans application du frein.

Au contraire, lors d'une phase de freinage, l'organe élastique 88 ne gêne pas la rotation la rotation de la biellette 50 par rapport au support garnitures 37 pour appliquer au mieux l'effort de freinage sur l'organe de freinage du véhicule.

Au surplus, l'agencement de l'organe élastique 88 permet de fournir une légère suspension du dispositif 5 comportant le support garnitures 37 et les garnitures 38 par rapport à la biellette 50.

L'agencement du support garnitures 37, de la biellette 50, du levier et du support (non visibles) est tel que la biellette 50 ne peut pas se désengager du support garnitures, dans des conditions normales d'utilisation.

A l'opposé, au niveau de la première extrémité 71 de la biellette 50, cette dernière est pourvue d'une portion tubulaire 92 dans laquelle est monté un manchon de fixation 93.

Une bague par exemple en composite peut être montée sur le manchon de fixation 93, pour éviter la friction entre ce manchon 93 et la portion tubulaire 92.

Cette bague peut en outre fournir une légère suspension entre la biellette et le support sur laquelle elle est assujettie mécaniquement.

Un organe de fixation 94, par exemple une vis, traverse le manchon de fixation 93 et est fixée sur le support (non visible) du véhicule.

Une rondelle 95 est interposée entre une tête de l'organe de fixation 94 et la portion tubulaire 92.

La portion tubulaire 92 de la biellette 50 est mobile en rotation par rapport au manchon de fixation 93, autour de la liaison pivot 70 ainsi formée.

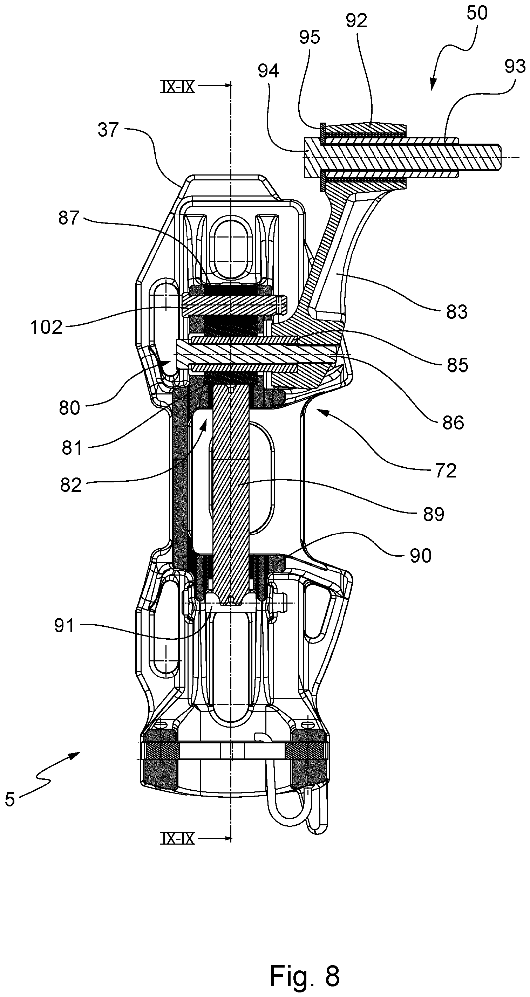

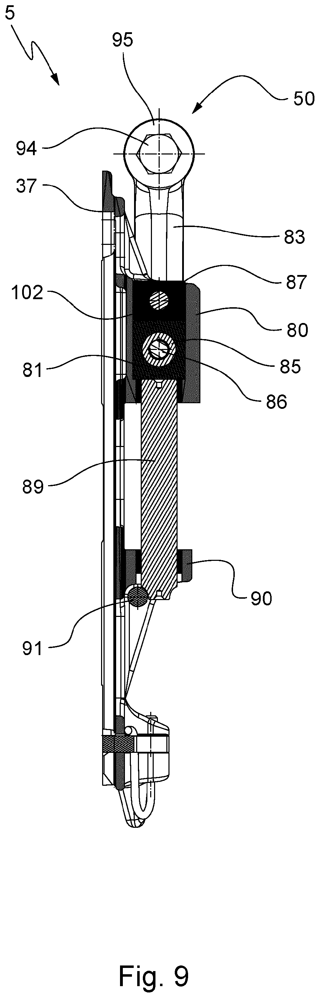

Les figures 8 à 10 illustrent un autre exemple de réalisation de la biellette de transmission d'efforts 50, qui diffère de la biellette décrite en référence aux figures 4 à 10 seulement en ce qu'elle est dépourvue d'un axe venant de matière avec le bras principal. Sa description sera donc faite plus brièvement que ci-dessus.

L'organe de montage 81 est ici formé d'un corps sensiblement cylindrique 99 s'étendant longitudinalement et ayant un orifice traversant 98 le corps cylindrique 99 selon une direction transversale.

Le corps cylindrique est ici dépourvu d'une ouverture supérieure et d'un bouchon mobile en translation dans le corps cylindrique.

L'organe de montage 81 est monté dans le logement 82 de la patte d'attache 80 sans jeu substantiel.

L'axe de montage 89 est monté mobile en rotation entre la patte d'attache 80, où il est à proximité immédiate de l'organe de montage 81 et le socle inférieur 90, où il repose sur l'organe de butée 91.

La pièce de blocage 87 est montée fixe dans le logement 82 de la patte d'attache 80, et est superposée avec l'organe de montage 81, de sorte que ce dernier est ici situé entre l'axe de montage 89 et la pièce de blocage 87.

La pièce de blocage 87 est pourvue d'un orifice traversé par un organe de fixation 102, par exemple un ensemble goupille et circlips, lequel organe de fixation 102 est monté en prise sur la patte d'attache 80.

Dans l'exemple décrit, la biellette 50 est pourvue, au niveau de sa deuxième extrémité 72, d'un manchon 85 emmanché dans son bras principal 83, et d'un organe de fixation 86, formé par exemple ici par une vis, monté au travers du manchon 85 et assujetti mécaniquement dans le bras principal 83.

L'ensemble formé par le manchon 85 et organe de fixation 86 est introduit dans l'orifice traversant 98 dans le corps cylindrique 99 de l'organe de montage 81.

La liaison pivot 75 est ainsi formée et la biellette 50 est montée à rotation par sa seconde extrémité 72 dans l'organe de montage 81.

A l'opposé de la biellette 50, le manchon de fixation 93 est monté dans la portion tubulaire 92, l'organe de fixation 94 traverse le manchon de fixation 93 et est fixée sur le support (non visible) du véhicule, avec la rondelle 95 qui est interposée entre une tête de l'organe de fixation 94 et la portion tubulaire 92.

La portion tubulaire 92 de la biellette 50 est mobile en rotation par rapport au manchon de fixation 93, autour de la liaison pivot 70 ainsi formée.

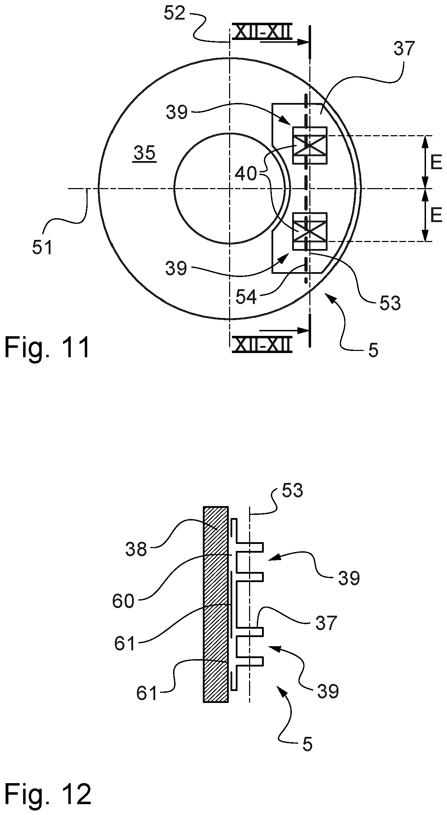

On va maintenant décrire plus en détail, en référence aux figures 11 à 23, le dispositif 5 et l'agencement des leviers 40 vis-à-vis du dispositif 5.

Sur les figures 11 à 14, le dispositif 5 est en regard du disque de frein 35.

Le dispositif 5, dont le support garnitures 37 et les garniture 38, présentent une orientation générale longitudinale et une orientation générale transversale.

Un axe central longitudinal 52 et un axe central transversal 51 sont illustrés.

Ils correspondent respectivement aux axes médians du disque de frein 35. L'axe central transversal 51 correspond en outre, sur la position illustrée sur la figure 11, à un axe central transversal du dispositif 5.

Le levier 40 est assujetti mécaniquement au support garnitures 37 via les zones d'attache 39.

Les zones d'attache 39 se trouvent au plus à environ 35 mm de l'axe central transversal 51 du dispositif 5. Ceci signifie que les distances E représentées sur la figure 3 sont chacune au plus égale à 35 mm.

Ici, les zones d'attache 39 se trouvent de part et d'autre de l'axe central transversal 51 et s'étendent donc au maximum, selon l'orientation générale longitudinale, sur environ 70 mm.

Plus généralement, la ou les zones d'attache 39 peuvent se trouver entre environ 0 et environ 35 mm de l'axe central transversal 51 et elles peuvent peut s'étendre selon une orientation générale longitudinale et sur une longueur comprise entre environ 15 mm et environ 70 mm.

Dans l'exemple décrit, les zones d'attache 39 s'étendent de part et d'autre de l'axe central transversal 51 de manière interrompue.

Autrement dit, les zones d'attache 39 sont distinctes.

En variante, les zone d'attache peuvent s'étendre de part et d'autre de l'axe central transversal 51 de manière ininterrompue.

Un axe longitudinal d'application des efforts 53 est illustré en traits pointillés fins, tandis qu'un axe longitudinal de maintien 54 est illustré en traits pointillés épais.

L'axe longitudinal d'application des efforts 53 est celui passant par les zones d'attaches 39 du support garnitures 37, lesquelles permettent l'assujettissement mécanique des leviers 40, tandis que l'axe longitudinal de maintien 54 est légèrement décalé par rapport à l'axe longitudinal d'application des efforts 53 et correspond à la zone de fixation des garnitures 38 sur le support garnitures 37.

Les forces appliquées par le levier 40 de la timonerie de freinage 4 sur le dispositif 5 de cette timonerie 4 pour le mettre au contact du disque de frein 35 sont sensiblement ainsi centrées sur le support garnitures 37.

Puisque les zones d'attache 39 du levier 40 sur le support garnitures 37 sont proches de l'axe central transversal 51, cela permet au support garnitures 37 de disposer d'un degré de liberté lorsqu'il transmet les efforts sur le disque de frein 35.

Dans l'exemple décrit, le dispositif 5 comporte au moins deux zones d'appui 60 sur le disque de frein 35 et au moins une zone de retrait 61 située entre les deux zones d'appui 60.

Plus généralement, le dispositif peut comporter une pluralité de zones d'appui entre lesquelles sont formées des zones de retrait.

Les zones d'appui 60 et de retrait 61 se succèdent selon l'orientation générale longitudinale du dispositif 5.

Les deux zones d'appui 60 et la zone de retrait 61 sont ici ménagées sur une face du support garnitures 37, opposée à celle sur laquelle sont formées les zones d'attache 39.

Chacune des deux zones d'appui 60 est ici ménagée de sorte à se trouver en regard d'une garniture 38 respective.

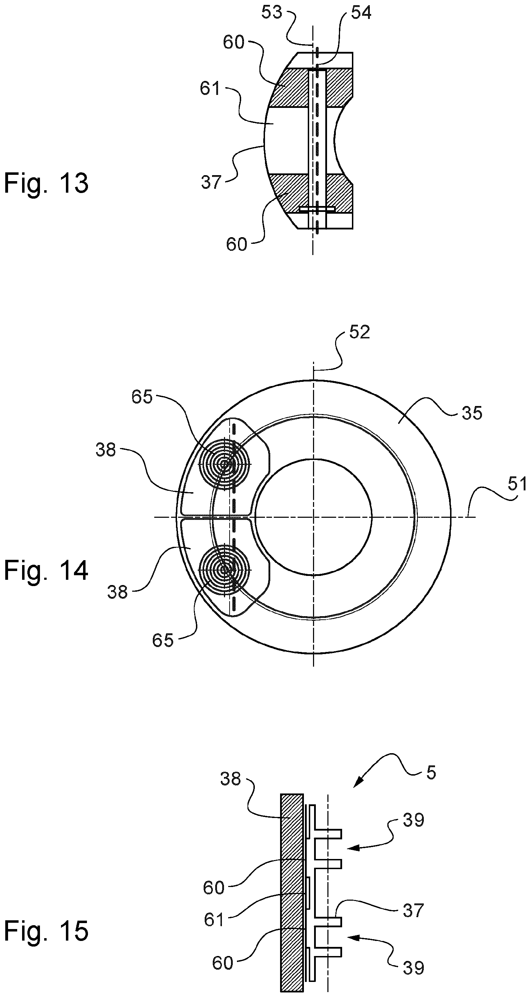

Ceci est représenté sur les figures 14 et 15 où l'on voit d'une part les zones d'appui 60 ménagées sur le support garnitures 37 et d'autre part des zones de contact privilégiées 65 ménagées sur les garnitures 38, qui correspondent respectivement aux zones d'appui 60.

On notera que les zones d'appui peuvent être formées par des protubérances sur les supports garnitures et/ou que les zone de retrait peuvent être formées par des renfoncements dans les supports garnitures. Les zones d'appui et les zones de retrait se trouvent ainsi dans des plans décalés.

Dans l'exemple décrit, les zones d'appui 60 et la zone de retrait 61 s'étendent totalement le long de l'orientation générale transversale du dispositif 5.

Au surplus, les zones d'appui 60 et la zone de retrait 61 sont ici ménagées sensiblement symétriquement par rapport à l'axe central transversal 51.

Le dispositif 5 de la timonerie de freinage 4 qui vient au contact du disque de frein 35 est donc pourvue d'une surface d'appui dite discontinue, avec seulement les zones d'appui 60 qui permettent de transmettre des efforts sur le disque de frein 35. Ceci permet de répartir la transmission des efforts sur le disque de frein 35.

Sur les figures 15 à 17, les zones d'appui 60 sont plus rapprochées l'une de l'autre et de l'axe central transversal 51, et la zone de retrait 61 est plus restreinte.

Il en ressort que les zones de contact privilégiées 65 ménagées sur les garnitures 38 et qui correspondent respectivement aux zones d'appui 60 sont aussi plus rapprochées l'une de l'autre et de l'axe central transversal 51.

Les zones d'attache 39 sont identiques à celles décrites plus haut.

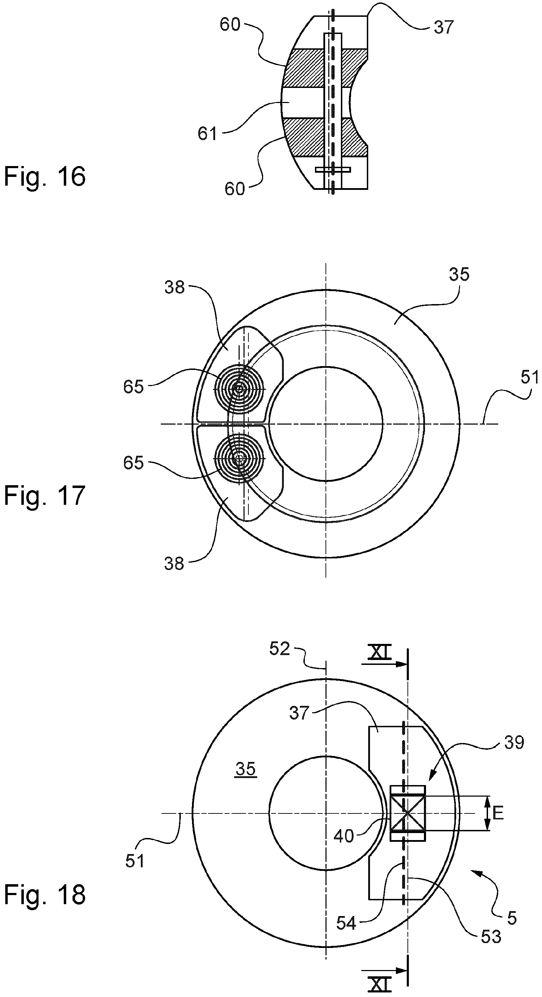

Sur les figures 18 à 21, le levier 40 est assujetti mécaniquement au support garnitures 37 via une unique zone d'attache 39.

La zone d'attache 39 se trouve au niveau de l'axe central transversal 51 du dispositif 5 et s'étend légèrement de part et d'autre de cet axe 51.

Par exemple, la zone d'attache s'étend seulement d'environ 10 mm à environ 20 mm de part et d'autre de l'axe central transversal 51.

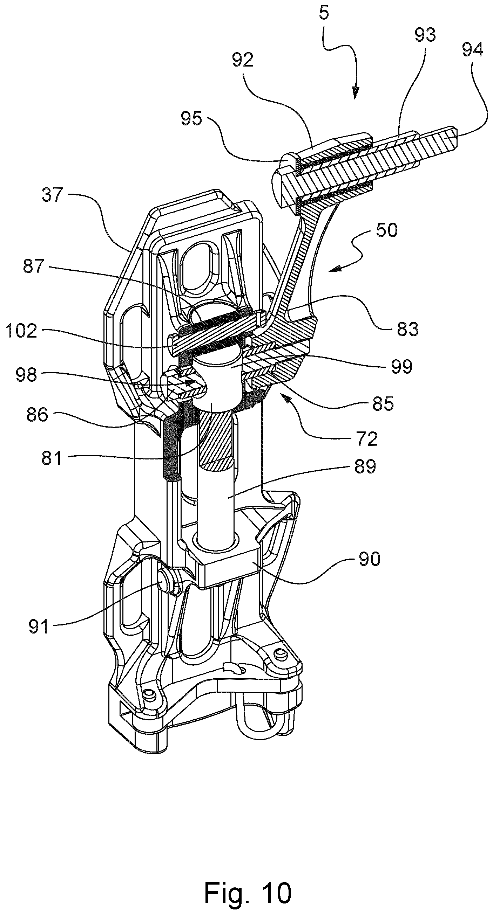

Ceci signifie que la distance E représentée sur la figure 10 est au plus égale à environ 40 mm, selon l'orientation générale longitudinale.

Plus généralement, une telle zone unique d'attache peut s'étendre selon l'orientation générale longitudinale et sur une longueur comprise entre environ 15 mm et environ 70 mm.

La zone d'attache unique 39 s'étend ici de part et d'autre de l'axe central transversal 51 de manière ininterrompue.

Les forces appliquées par le levier 40 de la timonerie de freinage 4 sur le dispositif 5 de cette timonerie 4 pour le mettre au contact du disque de frein 35 sont sensiblement ainsi centrées sur le support garnitures 37.

Puisque la zone d'attache 39 du levier 40 sur le support garnitures 37 est au niveau de l'axe central transversal 51, cela permet au support garnitures 37 de disposer d'un degré de liberté lorsqu'il transmet les efforts sur le disque de frein 35.

Dans l'exemple décrit, le dispositif 5 comporte au moins deux zones d'appui 60 sur le disque de frein 35 et au moins une zone de retrait 61 située entre les deux zones d'appui 60.

Les zones d'appui 60 et de retrait 61 se succèdent selon l'orientation générale longitudinale du dispositif 5 et sont identiques à celle du dispositif illustré sur les figures 11 à 14.

Les deux zones d'appui 60 et la zone de retrait 61 sont ici ménagées sur une face du support garnitures 37, opposée à celle sur laquelle sont formées les zones d'attache 39, et chacune des deux zones d'appui 60 est ici ménagée de sorte à se trouver en regard d'une garniture 38 respective.

Des zones de contact privilégiées 65 sont ainsi ménagées sur les garnitures 38, qui correspondent respectivement aux zones d'appui 60.

Les zones d'appui 60 et la zone de retrait 61 s'étendent totalement le long de l'orientation générale transversale du dispositif 5, et sont ici ménagées sensiblement symétriquement par rapport à l'axe central transversal 51.

Le dispositif 5 de la timonerie de freinage 4 qui vient au contact du disque de frein 35 est donc pourvue d'une surface d'appui dite discontinue, avec seulement les zones d'appui 60 qui permettent de transmettre des efforts sur le disque de frein 35. Ceci permet de répartir la transmission des efforts sur le disque de frein 35.

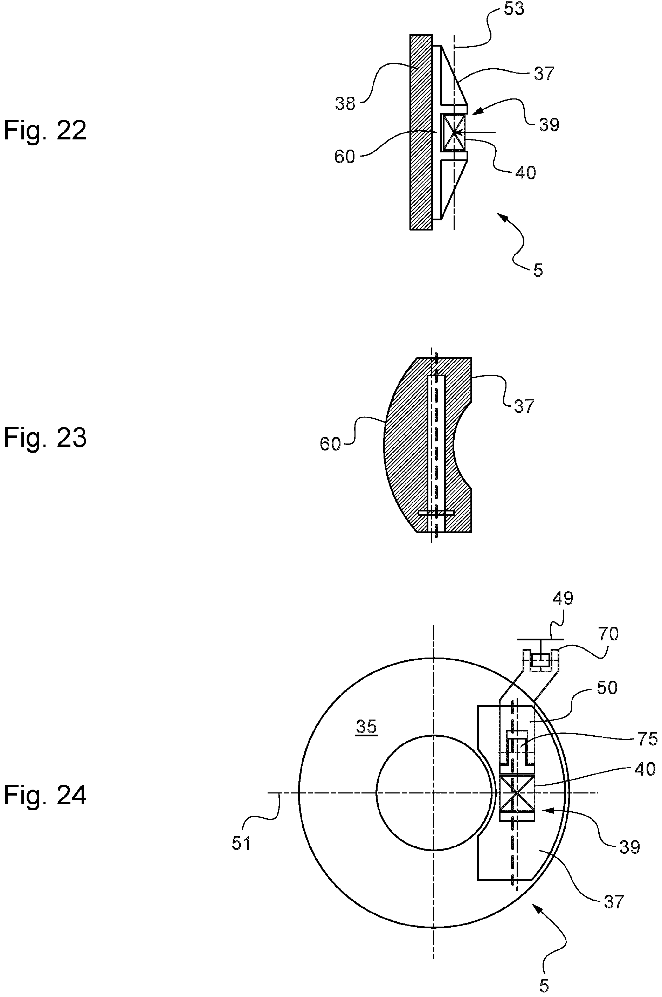

Sur les figures 22 et 23, le dispositif 5 est dépourvu de zone de retrait et ne présente donc qu'une unique zone d'appui 60 qui s'étend sur tout la face du support garnitures 37.

La figure 24 est une vue similaire à celle de la figure 18, avec en plus la biellette de transmission d'efforts 50, visible ici très schématiquement par rapport aux figures 3 à 10.

Ainsi qu'expliqué plus haut, la biellette de transmission d'efforts 50 est assujettie mécaniquement à sa première extrémité 71 au support 49 du véhicule et à sa seconde extrémité 72 opposée à sa première extrémité au support garnitures 37, et à proximité immédiate de la zone d'attache unique 39 du levier 40 sur ce même support garnitures 37.

La biellette de transmission d'efforts 50 est assujettie mécaniquement par les liaisons pivots 70, 75 respectivement au support 49 du véhicule et au support garnitures 37.

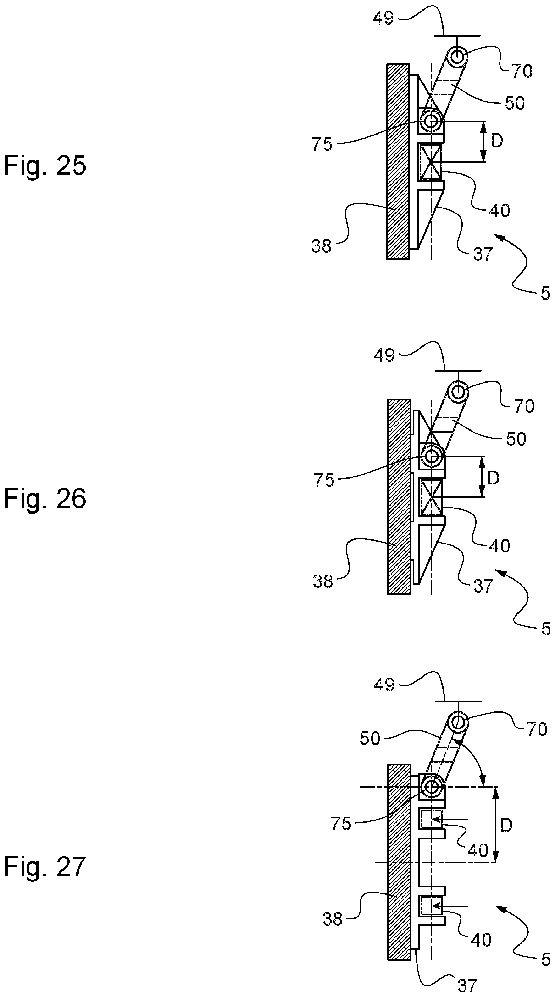

Puisque la ou les zones d'attache 39 du levier 40 sur le support garnitures 37 sont rapprochées et/ou centrées sur l'axe central transversal 51 du dispositif 5, la liaison pivot 75 qui relie la biellette de transmission d'efforts 50 au support garnitures 37 se trouve elle aussi rapprochée de ce même axe central transversal 51, limitant ainsi la distance D représentée sur les figures 25 à 27.

Ceci permet notamment de disposer d'un système 1 particulièrement compact.

La figure 25 montre aussi très schématiquement la biellette de transmission d'efforts 50 assujettie sur le support garnitures 37 d'un dispositif 5 similaire à celui décrit en référence à la figure 22, sans zone de retrait sur le support garnitures 37, et avec une zone d'attache unique 39 du levier 40 sur le support garnitures 37.

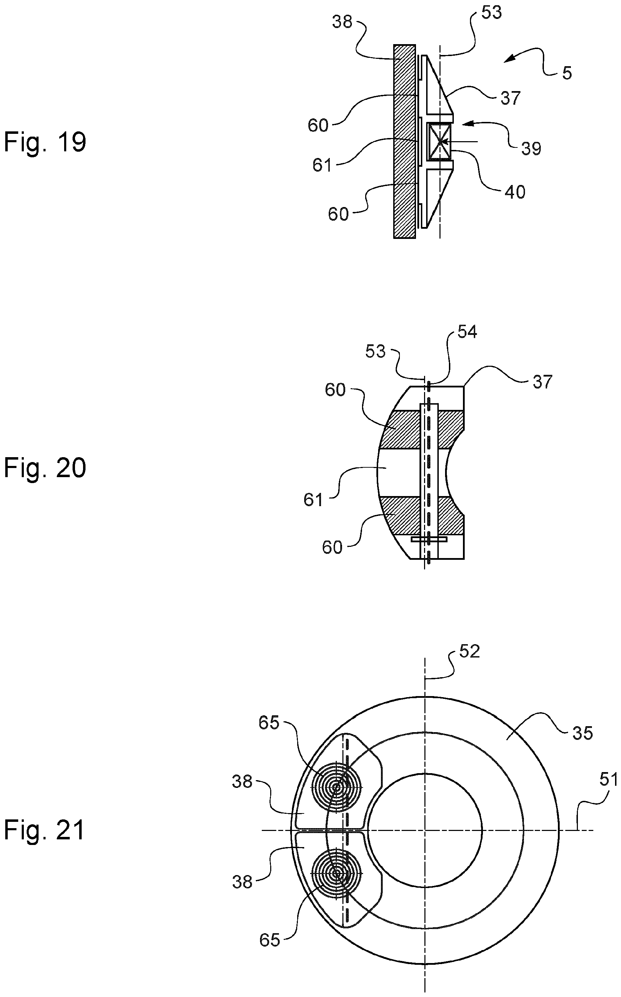

La figure 26 montre aussi très schématiquement la biellette de transmission d'efforts 50 assujettie sur le support garnitures 37 d'un dispositif 5 similaire à celui décrit en référence à la figure 19, avec des zones d'appui 60 et une zone de retrait 61 ménagées sur le support garnitures 37, et avec une zone d'attache unique 39 du levier 40 sur le support garnitures 37.

La figure 27 montre aussi très schématiquement la biellette de transmission d'efforts 50 assujettie sur le support garnitures 37 d'un dispositif 5 assez proche de ceux décrits en référence aux figures 12 et 15, mais dépourvu de zone de retrait sur le support garnitures 37 (à la manière de ceux décrits en référence aux figures 22 et 25), tandis qu'il comporte des zones d'attaches 39 distinctes du levier 40 sur le support garnitures 37.

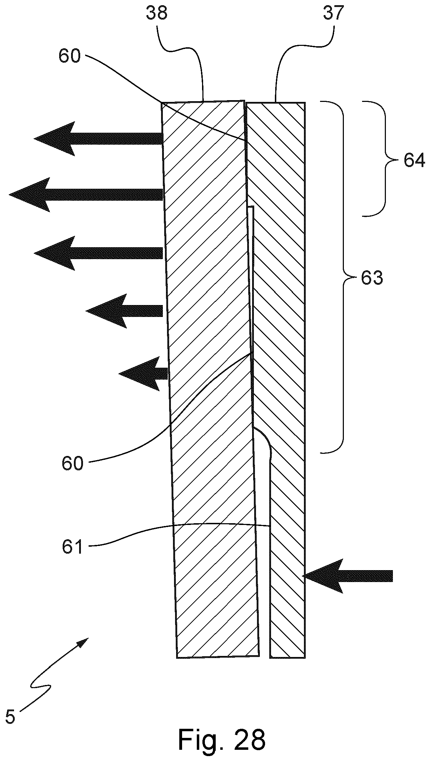

La figure 28 montre très schématiquement la biellette de transmission d'efforts 50 assujettie sur le support garnitures 37 d'un dispositif 5 assez proche de ceux décrits plus haut, mais dont la zone d'appui 60 est ici formée en escalier. Autrement dit, la zone d'appui 60 comporte différentes portions d'appui 63 et 64 plus ou moins décalées par rapport à la zone de retrait 61 adjacente. En particulier ici, la portion d'appui 63 forme une zone dite de sur-appui.

Dans des variantes non illustrées, le support-garnitures peut comporter une ou plusieurs zones de retrait s'étendant sur environ 100 mm à environ 300 mm depuis l'axe central transversal dudit dispositif.

La ou les zones de retrait peuvent être formées par des cavités ayant une profondeur comprise par exemple entre environ 0,1 mm et environ 0,5 mm.

Selon un premier exemple de réalisation, le support-garnitures peut comporter une unique zone de retrait s'étendant sur environ 180 mm (ou sur 90 mm de part et d'autre de l'axe transversal), et ayant une cavité d'environ 0,2 mm ; le reste du support-garnitures formant globalement une ou plusieurs zones d'appui.

Selon un deuxième exemple de réalisation, le support-garnitures peut comporter une première zone de retrait s'étendant sur environ 120 mm (ou sur 60 mm de part et d'autre de l'axe transversal), et ayant une cavité d'environ 0,3 mm, puis des deuxièmes zones de retrait succédant immédiatement ou non à la première zone de retrait, s'étendant chacune sur environ 60 mm et ayant une cavité d'environ 0,15 mm ; le reste du support-garnitures formant globalement une ou plusieurs zones d'appui.

Selon un troisième exemple de réalisation, le support-garnitures peut comporter une première zone de retrait s'étendant sur environ 120 mm (ou sur 60 mm de part et d'autre de l'axe transversal), et ayant une cavité d'environ 0,35 mm, puis des deuxièmes zones de retrait succédant immédiatement ou non à la première zone de retrait, s'étendant chacune sur environ 60 mm et ayant une cavité d'environ 0,2 mm ; le reste du support-garnitures formant globalement une ou plusieurs zones d'appui.

De tels agencements des zones de retrait permettent de répartir la transmission des efforts sur l'organe de freinage.

D'autres variantes non illustrées sont décrites ci-dessous.

La biellette de transmission d'efforts peut présenter une forme en Y, ou bien en H, ou encore I, plutôt qu'une forme en L ou en S.

L'organe élastique peut être formé par au moins un ressort par exemple hélicoïdal, ou au moins un élastomère plutôt que par une ou plusieurs rondelles Belleville.

Les zones d'appui et/ou les zone de retrait peuvent être ménagées dans les garnitures plutôt que dans les supports garnitures.

Certaines zones d'appui et/ou de retrait peuvent s'étendre totalement le long de l'orientation générale transversale, tandis que d'autres de ces zones peuvent s'étendre seulement partiellement.

Les zones d'appui et de retrait ne sont pas ménagées sensiblement symétriquement par rapport à l'axe central transversal.

Une unique garniture, plutôt que deux garnitures, est montée sur chacun des supports garnitures ou, au contraire, plus de deux garnitures sont montées sur chacun des supports garnitures.

La zone d'attache du support-garnitures à laquelle est assujetti le levier se trouve à plus de 35 mm de l'axe central transversal du dispositif.

Le système de freinage ferroviaire peut être différent de celui décrit ci-dessus en ce qu'il peut s'agir seulement d'un frein de service, ou bien d'un frein de parking, et que le mécanisme peut être à ressorts comme celui décrit par exemple dans le document EP 2 154 040.

Plus généralement, l'invention ne se limite pas aux exemples décrits et représentés.

## Revendications

1. Système de freinage ferroviaire pour véhicule ferroviaire, comportant une timonerie de freinage (4), un frein de service et/ou de parking (6, 7) configuré pour agir sur au moins un organe de freinage (35) dudit véhicule ferroviaire par l'intermédiaire de ladite timonerie de freinage, laquelle est pourvue d'au moins un dispositif (5) ayant au moins un support garnitures (37) et au moins une garniture (38) assujettie mécaniquement sur ledit au moins un support garnitures, et au moins une biellette de transmission d'efforts (50) assujettie mécaniquement par une première extrémité (71) à un support (49) dudit véhicule et par une seconde extrémité (72) opposée à ladite première extrémité audit au moins un support garnitures, **caractérisé en ce que** ledit au moins un support garnitures comporte une patte d'attache (80) pourvue d'un logement (82) et d'un organe de montage (81) logé dans ledit logement (82), et ladite au moins une biellette de transmission d'efforts est montée à rotation par sa seconde extrémité dans ledit organe de montage.

2. Système de freinage ferroviaire selon la revendication 1, **caractérisé en ce que**, **caractérisé en ce que** ladite au moins une biellette de transmission d'efforts (50) présente une forme sensiblement en L, ou en S, ou en H, ou en Y.

3. Système de freinage ferroviaire selon l'une des revendications 1 et 2, **caractérisé en ce que** ladite au moins une biellette de transmission d'efforts (50) est assujettie mécaniquement par des liaisons pivots (70, 75) respectivement audit support du véhicule et audit au moins un support garnitures.

4. Système de freinage ferroviaire selon l'une quelconque des revendications 1 à 3, **caractérisé en ce que** ladite au moins une biellette de transmission d'efforts (50) est pourvue, au niveau de sa deuxième extrémité (72), d'un axe (84) venant de matière avec ladite biellette de transmission d'efforts et saillant d'un bras principal (83) de ladite biellette de transmission.

5. Système de freinage ferroviaire selon l'une quelconque des revendications 1 à 3, **caractérisé en ce que** ladite au moins une biellette de transmission d'efforts (50) est pourvue, au niveau de sa deuxième extrémité (72), d'un manchon (85) emmanché dans un bras principal (83) de ladite biellette de transmission et d'un organe de fixation (86) monté au travers dudit manchon et assujetti mécaniquement dans le bras principal (83).

6. Système de freinage ferroviaire selon l'une quelconque des revendications 1 à 5, **caractérisé en ce que** ledit au moins un support garnitures (37) comporte une pièce de blocage (87) montée fixe dans ledit logement (82) et superposée avec ledit organe de montage (81).

7. Système de freinage ferroviaire selon la revendication 6, **caractérisé en ce que** ledit au moins un support garnitures (37) comporte en outre au moins un organe élastique (88) interposé entre ladite pièce de blocage (87) et ledit organe de montage (81).

8. Système de freinage ferroviaire selon la revendication 7, **caractérisé en ce que** ledit au moins un organe élastique (88) est formé par une ou plusieurs rondelles Belleville, ou par au moins un ressort par exemple hélicoïdal, ou au moins un élastomère.

9. Système de freinage ferroviaire selon l'une quelconque des revendications 1 à 8, **caractérisé en ce que** ladite timonerie comporte au moins un levier (40) s'étendant depuis ledit frein de service et/ou de parking (6, 7) jusqu'audit dispositif (5) auquel il est fixé au niveau d'une zone d'attache (39) dudit au moins un support garnitures (37), ledit au moins un levier étant configuré pour transmettre un effort d'application dudit frein de service et/ou de parking sur ledit dispositif, et ladite biellette de transmission (50) d'efforts est fixée à proximité immédiate de ladite zone d'attache dudit au moins un levier.

10. Système de freinage ferroviaire selon la revendication 9, **caractérisé en ce que** ledit au moins un support garnitures (37) est pourvu d'un socle inférieur (90) et d'un axe de montage (89) monté mobile en rotation entre ladite patte d'attache (80) et ledit socle inférieur, ledit levier (40) étant assujetti mécaniquement audit axe de montage.

11. Système de freinage ferroviaire selon la revendication 10, **caractérisé en ce que** ledit axe de montage (89) est interposé entre ledit organe de montage (81) et un organe de butée (91) situé au niveau dudit socle inférieur (90).

12. Système selon l'une quelconque des revendications 9 à 11, **caractérisé en ce que** ladite zone d'attache (39) se trouve au plus à 35 mm d'un axe central transversal (51) dudit dispositif (5) ayant ledit au moins un support garnitures (37) et ladite au moins une garniture (38).

13. Système de freinage ferroviaire selon l'une quelconque des revendications 9 à 12, **caractérisé en ce que** ladite au moins une biellette de transmission d'efforts (50) s'étend sensiblement dans un même plan que celui dans lequel s'étend ledit au moins un levier (40).

14. Système selon l'une quelconque des revendications 1 à 13, **caractérisé en ce que** ledit dispositif (5) comporte au moins deux zones d'appui (60) sur ledit au moins un organe de freinage (35) et au moins une zone de retrait (61) située entre les deux dites zones d'appui, et au moins une dite zone d'appui est formée en escalier et comporte différentes portions d'appui (63, 64) plus ou moins décalées par rapport à ladite zone de retrait.

15. Véhicule ferroviaire comportant au moins un organe de freinage (35), notamment un disque de frein, et au moins un système de freinage ferroviaire (1) selon l'une quelconque des revendications 1 à 14, qui est configuré pour agir sur ledit au moins un organe de freinage.

## Patentansprüche

1. Eisenbahnbremssystem für ein Eisenbahnfahrzeug, umfassend ein Bremsgestänge (4), eine Betriebs- und/oder eine Feststellbremse (6, 7), die dazu konfiguriert sind, auf mindestens ein Bremselement (35) des Eisenbahnfahrzeugs mit Hilfe des Bremsgestänges einzuwirken, welches mit mindestens einer Vorrichtung (5) versehen ist, die mindestens einen Bremsbelagträger (37) und mindestens einen Bremsbelag (38) aufweist, der mechanisch an dem mindestens einen Bremsbelagträger befestigt ist, und mindestens eine Kraftübertragungsverbindungsstange (50), die mit einem ersten Ende (71) an einem Träger (49) des Fahrzeugs und mit einem gegenüberliegenden zweiten Ende (72) an mindestens einem Bremsbelagträger mechanisch befestigt ist, **dadurch gekennzeichnet, dass** der mindestens eine Bremsbelagträger ein Befestigungssystem (80) umfasst, das mit einem Gehäuse (82) und einem Montageelement (81), das im Gehäuse (82) untergebracht ist, versehen ist, und wobei die mindestens eine Kraftübertragungsverbindungsstange mit ihrem zweiten Ende im Montageelement drehbar gelagert ist.

2. Eisenbahnbremssystem nach Anspruch 1, **dadurch gekennzeichnet, dass**, **gekennzeichnet dadurch, dass** die mindestens eine Kraftübertragungsverbindungsstange (50) eine im Wesentlichen L-förmige oder S-förmige oder H-förmig oder Y-förmige Form aufweist.

3. Eisenbahnbremssystem nach einem der Ansprüche 1 und 2, **dadurch gekennzeichnet, dass** die mindestens eine Kraftübertragungsverbindungsstange (50) durch Drehverbindungen (70, 75) jeweils mechanisch am Träger des Fahrzeugs und dem mindestens einen Bremsbelagträger befestigt ist.

4. Eisenbahnbremssystem nach einem der Ansprüche 1 bis 3, **dadurch gekennzeichnet, dass** die mindestens eine Kraftübertragungsverbindungsstange (50) ihrem zweiten Ende (72) mit einer Welle (84) versehen ist, die einstückig mit der Kraftübertragungsverbindungsstange ausgebildet ist und von einem Hauptarm (83) der Übertragungsverbindungsstange vorsteht.

5. Eisenbahnbremssystem nach einem der Ansprüche 1 bis 3, **dadurch gekennzeichnet, dass** die mindestens eine Kraftübertragungsverbindungsstange (50) an ihrem zweiten Ende (72) mit einer Hülse (85), die in einen Hauptarm (83) der Übertragungsverbindungsstange eingesetzt ist, und mit einem Fixierungselement (86) versehen ist, das durch die Hülse gelagert und im Hauptarm (83) mechanisch befestigt ist.

6. Eisenbahnbremssystem nach einem der Ansprüche 1 bis 5, **dadurch gekennzeichnet, dass** der mindestens eine Bremsbelagträger (37) ein Blockierbauteil (87) umfasst, das fest im Gehäuse (82) gelagert ist und mit dem Montageelement (81) überlagert wird.

7. Eisenbahnbremssystem nach Anspruch 6, **dadurch gekennzeichnet, dass** der mindestens eine Bremsbelagträger (37) ferner mindestens ein elastisches Element (88) umfasst, das zwischen dem Blockierbauteil (87) und dem Montageelement (81) eingefügt ist.

8. Eisenbahnbremssystem nach Anspruch 7, **dadurch gekennzeichnet, dass** das mindestens eine elastische Element (88) aus mindestens einer oder mehreren Tellerfedern oder mindestens einer Feder, zum Beispiel einer Schraubenfeder, oder mindestens einem Elastomer ausgebildet ist.

9. Eisenbahnbremssystem nach einem der Ansprüche 1 bis 8, **dadurch gekennzeichnet, dass** das Gestänge mindestens einen Hebel (40) umfasst, der sich von der Betriebs- und/oder Feststellbremse (6, 7) bis zu der Vorrichtung (5) erstreckt, an der er an einem Befestigungsbereich (39) des mindestens einen Bremsbelagsträgers (37) fixiert ist, wobei der mindestens eine Hebel dazu konfiguriert ist, eine Betätigungskraft der Betriebs- und/oder Feststellbremse auf die Vorrichtung zu übertragen, und die mindestens eine Kraftübertragungsverbindungsstange (50) in der unmittelbaren Nähe des Befestigungsbereichs des mindestens einen Hebel fixiert ist.

10. Eisenbahnbremssystem nach Anspruch 9, **dadurch gekennzeichnet, dass** der mindestens eine Bremsbelagträger (37) mit einer unteren Basis (90) und einer Lagerwelle (89), die drehbar zwischen dem Befestigungssystem (80) und der unteren Basis gelagert ist, versehen ist, wobei der Hebel (40) mechanisch an der Lagerwelle befestigt ist.

11. Eisenbahnbremssystem nach Anspruch 10, **dadurch gekennzeichnet, dass** die Lagerwelle (89) zwischen dem Montageelement (81) und einem Anschlagelement (91), das sich an der unteren Basis (90) befindet, eingefügt ist.

12. Eisenbahnbremssystem nach einem der Ansprüche 9 bis 11, **dadurch gekennzeichnet, dass** der Befestigungsbereich (39) höchstens 35 mm von einer Quermittelachse (51) der Vorrichtung (5) befindet und den mindestens einen Bremsbelagträger (37) und den mindestens einen Bremsbelag (38) aufweist.

13. Eisenbahnbremssystem nach einem der Ansprüche 9 bis 12, **dadurch gekennzeichnet, dass** sich der mindestens eine Kraftübertragungsverbindungsstange (50) im Wesentlichen in derselben Ebene erstreckt wie die Ebene, in der sich der mindestens eine Hebel (40) erstreckt.

14. System nach einem der Ansprüche 1 bis 13, **dadurch gekennzeichnet, dass** die Vorrichtung (5) mindestens zwei Auflagebereiche (60) für das mindestens eine Bremselement (35) und mindestens einen Rückzugsbereich (61) umfasst, der sich zwischen den beiden Auflagebereichen befindet, und mindestens ein Auflagebereich abgestuft ausgebildet ist und unterschiedliche Auflageabschnitte (63, 64) umfasst, die in Bezug auf den Rückzugsbereich mehr oder weniger versetzt sind.

15. Eisenbahnfahrzeug, das mindestens ein Bremselement (35), insbesondere eine Bremsscheibe, und mindestens ein Eisenbahnbremssystem (1) nach einem der Ansprüche 1 bis 14 umfasst, das dazu konfiguriert ist, auf das mindestens eine Bremselement einzuwirken.

## Claims

1. Railway braking system for a rail vehicle, including brake rigging (4), a service and/or parking brake (6, 7) configured to act on at least one braking member (35) of said rail vehicle by means of said brake rigging, which is provided with at least one device (5) having at least one lining support (37) and at least one lining (38) mechanically secured to said at least one lining support, and at least one force-transmission linkage (50) mechanically secured by a first end (71) to a support (49) of said vehicle and by a second end (72) opposite to said first end to said at least one lining support, **characterised in that** said at least one lining support includes a fastening lug (80) provided with a housing (82) and with a mounting member (81) housed in said housing (82), and said at least one force-transmission linkage is rotatably mounted by its second end in said mounting member.

2. Railway braking system according to claim 1, **characterised in that**, **characterised in that** said at least one force-transmission linkage (50) has a substantially L, S, H, or Y shape.

3. Railway braking system according to one of claims 1 and 2, **characterised in that** said at least one force-transmission linkage (50) is mechanically secured by pivot connections (70, 75) respectively to said support of the vehicle and to said at least one lining support.

4. Railway braking system according to any one of claims 1 to 3, **characterised in that** said at least one force-transmission linkage (50) is provided, at the second end (72) thereof, with a shaft (84) made in one piece with said force-transmission linkage and projecting from a main arm (83) of said transmission linkage.

5. Railway braking system according to any one of claims 1 to 3, **characterised in that** said at least one force-transmission linkage (50) is provided, at the second end (72) thereof, with a sleeve (85) fitted in a main arm (83) of said transmission linkage and with a securing member (86) mounted through said sleeve and mechanically secured in the main arm (83).

6. Railway braking system according to any one of claims 1 to 5, **characterised in that** said at least one lining support (37) includes a locking piece (87) mounted fixedly in said housing (82) and superimposed with said mounting member (81).

7. Railway braking system according to claim 6, **characterised in that** said at least one lining support (37) furthermore includes at least one elastic member (88) interposed between said locking piece (87) and said mounting member (81).

8. Railway braking system according to claim 7, **characterised in that** said at least one elastic member (88) is formed by one or more Belleville washers, or by at least one spring, for example helical, or at least one elastomer.

9. Railway braking system according to any one of claims 1 to 8, **characterised in that** said rigging includes at least one lever (40) extending from said service and/or parking brake (6, 7) as far as said device (5) to which it is secured at an attachment zone (39) of said in least one lining support (37), said at least one lever being configured to transmit a force for applying said service and/or parking brake to said device, and said force-transmission linkage (50) is secured in the immediate vicinity of said attachment zone of said at least one lever.

10. Railway braking system according to claim 9, **characterised in that** said at least one lining support (37) is provided with a bottom pedestal (90) and a mounting shaft (89) mounted so as to be able to move in rotation between said fastening lug (80) and said bottom pedestal, said lever (40) being mechanically secured to said mounting shaft.

11. Railway braking system according to claim 10, **characterised in that** said mounting shaft (89) is interposed between said mounting member (81) and a stop member (91) located at said bottom pedestal (90).

12. System according to any one of claims 9 to 11, **characterised in that** said attachment zone (39) is located at no more than 35 mm from a transverse central axis (51) of said device (5) having said at least one lining support (37) and said at least one lining (38).

13. Railway braking system according to any one of claims 9 to 12, **characterised in that** said at least one force-transmission linkage (50) extends substantially in the same plane as the one in which said at least one lever (40) extends.

14. System according to any one of claims 1 to 13, **characterised in that** said device (5) includes at least two bearing zones (60) on said at least one braking member (35) and at least one recessed zone (61) located between the two said bearing zones, and at least one said bearing zone is formed in a staircase and includes various bearing portions (63, 64) offset to a greater or lesser extent with respect to said recessed zone.

15. Rail vehicle including at least one braking member (35), in particular a brake disc, and at least one railway braking system (1) according to any one of claims 1 to 14, which is configured to act on said at least one braking member.
